# DEMANDE DE BREVET EUROPEEN

(11) **EP 3 804 510 A1**
(43) Date de publication de la demande: **14.04.2021**
(21) Numéro de dépôt: 20200880.1
(22) Date de dépôt: 08.10.2020
(51) Int. Cl.: A01K 13/00

(54) **ARTICLE VESTIMENTAIRE COMPRENANT UNE COUVERTURE DESTINÉE À PROTÉGER AU MOINS PARTIELLEMENT LE CORPS D'UN ANIMAL**

(30) Priorité: 08.10.2019 FR 1911160
(71) Demandeur: Decathlon, 59650 Villeneuve d'Ascq (FR)
(72) Inventeur: KORALEWSKI, Emmanuelle, 59650 Villeneuve d'Ascq (FR)
(74) Mandataire: Sayettat, Julien Christian

(57) **Abrégé**

L'invention concerne un article vestimentaire comprenant une couverture destinée à protéger au moins partiellement le corps d'un animal (1), ladite couverture comprenant une zone dorsale (2) s'étendant longitudinalement le long d'une ligne sagittale entre un bord avant (2a) destiné à être disposé sur le garrot (1a) et un bord arrière (2b) destiné à être disposé sur la croupe (1b) dudit animal, la zone dorsale (2) étant pourvue d'une gaine (3) dans laquelle un cordon (4) est disposé en présentant un bout solidaire de la couverture au voisinage de l'extrémité (3a) de ladite gaine et un bout libre (4a) saillant de l'ouverture (3b), ledit bout libre étant équipé d'un dispositif (5) de réglage de la dimension du cordon (4) qui est disposé dans la gaine (3) de sorte à permettre un ajustement de la dimension longitudinale de ladite zone dorsale à la dimension longitudinale du dos (1c) de l'animal (1).

## Description

L'invention concerne un article vestimentaire comprenant une couverture destinée à protéger au moins partiellement le corps d'un animal.

Elle s'applique en particulier aux articles vestimentaires utilisés pour protéger un cheval contre des conditions climatiques et/ou environnementales potentiellement nuisibles pour sa santé, notamment le froid, les intempéries, ou encore les insectes nuisibles, notamment les mouches.

Pour ce faire, la couverture comprend une zone dorsale qui s'étend longitudinalement le long d'une ligne sagittale entre un bord avant destiné à être disposé sur le garrot et un bord arrière destiné à être disposé sur la croupe de l'animal.

Pour assurer une bonne protection du corps de l'animal, la couverture peut également comprendre :
- deux parties latérales s'étendant de part et d'autre de la zone dorsale pour venir recouvrir chacune au moins partiellement un flanc, et notamment une épaule de l'animal ; et/ou
- une partie arrière s'étendant dans le prolongement longitudinal du bord arrière, et destinée à recouvrir les fesses dudit animal.

En particulier, chaque partie latérale peut être prolongée longitudinalement par une partie avant destinée à recouvrir un côté du poitrail de l'animal, lesdites parties avant présentant chacune un bord libre qui sont destinés à être disposés en regard sur ledit poitrail, notamment avec des moyens de fixation réversible.

Il existe des articles vestimentaires dont les couvertures sont équipées d'au moins un dispositif pour permettre l'ajustement de leurs dimensions à la morphologie du cheval.

A cet effet, le document US-876 435 décrit une couverture équipée d'un dispositif de réglage de sa dimension longitudinale, ledit dispositif comprenant un cordon arrière destiné à venir sous la queue d'un cheval et qui présente à chacune de ses extrémités une sangle débouchant sur la face extérieure de ladite couverture, chaque sangle étant équipée d'une première boucle de serrage et présentant une extrémité libre qui s'engage dans une deuxième boucle de serrage fixée sur ladite face extérieure.

Cette solution ne donne pas entière satisfaction, en ce que le dispositif de réglage, en plus d'être complexe à utiliser, ne permet pas d'ajuster efficacement la dimension longitudinale de la couverture à la longueur du dos du cheval. Par ailleurs, le dispositif enserre partiellement le corps de l'animal, ce qui peut constituer une gêne pour ledit animal.

L'invention vise à perfectionner l'art antérieur en proposant notamment un article vestimentaire dont la couverture présente une dimension longitudinale qui peut être facilement et rapidement ajustée à différentes morphologies de chevaux, et ce sans enserrer excessivement son corps.

A cet effet, l'invention propose un article vestimentaire comprenant une couverture destinée à protéger au moins partiellement le corps d'un animal, ladite couverture comprenant une zone dorsale s'étendant longitudinalement le long d'une ligne sagittale entre un bord avant destiné à être disposé sur le garrot et un bord arrière destiné à être disposé sur la croupe dudit animal, la zone dorsale était pourvue d'une gaine présentant une extrémité située au voisinage d'un bord et une ouverture opposée à ladite extrémité, un cordon étant disposé dans ladite gaine en présentant un bout solidaire de la couverture au voisinage de l'extrémité de ladite gaine et un bout libre saillant de l'ouverture, ledit bout libre étant équipé d'un dispositif de réglage de la dimension du cordon qui est disposé dans la gaine de sorte à permettre un ajustement de la dimension longitudinale de ladite zone dorsale à la dimension longitudinale du dos de l'animal.

D'autres particularités et avantages de l'invention apparaîtront dans la description qui suit, faite en référence aux figures annexées, dans lesquelles :
[Fig. 1a] et
   [Fig.1b] représentent en vue de côté un animal revêtu d'un article vestimentaire selon l'invention, respectivement avant (figure 1a) et après (figure 1b) l'ajustement de la zone dorsale au dos dudit animal ;
[Fig.2] représente en vue de dessus l'animal et l'article vestimentaire des figures 1a et 1b,
[Fig.2a] étant un agrandissement en perspective vue de l'arrière de la zone A de la figure 2 ;
[Fig.3] représente en vue de face un animal revêtu d'un article vestimentaire selon une variante de réalisation de l'invention ;
[Fig.4a] et
   [Fig.4b] représentent en vue de côté un animal revêtu d'un article vestimentaire selon une autre variante de réalisation de l'invention, avec un manchon de recouvrement de l'encolure en position respectivement de repos (figure 4a) et étirée longitudinalement (figure 4b) ;
[Fig.5] représente en vue de côté agrandie un animal revêtu d'un article vestimentaire selon une autre variante de réalisation de l'invention, suivant plusieurs étapes d'ajustement dudit article à la morphologie dudit animal.

En relation avec ces figures, on décrit ci-dessous un article vestimentaire comprenant une couverture destinée à protéger au moins partiellement le corps d'un animal 1.

L'article vestimentaire peut notamment être utilisé pour protéger un cheval 1 contre des conditions climatiques et/ou environnementales potentiellement nuisibles pour sa santé, notamment le froid, les intempéries, ou encore les insectes nuisibles, notamment les mouches.

A cet effet, l'article vestimentaire peut être réalisé en un matériau textile ajouré, notamment de type mesh, ce qui permet d'empêcher les insectes nuisibles de se poser sur le corps du cheval 1 tout en permettant une circulation d'air entre l'intérieur et l'extérieur dudit article, afin faciliter l'évacuation de la transpiration dudit cheval.

En variante, l'article vestimentaire peut être réalisé en un matériau textile imperméable et/ou isolant, afin de protéger le cheval 1 contre les intempéries et/ou le froid.

La couverture comprend une zone dorsale 2 qui s'étend longitudinalement le long d'une ligne sagittale entre un bord avant 2a destiné à être disposé sur le garrot 1a de l'animal 1 et un bord arrière 2b destiné à être disposé sur la croupe 1b dudit animal.

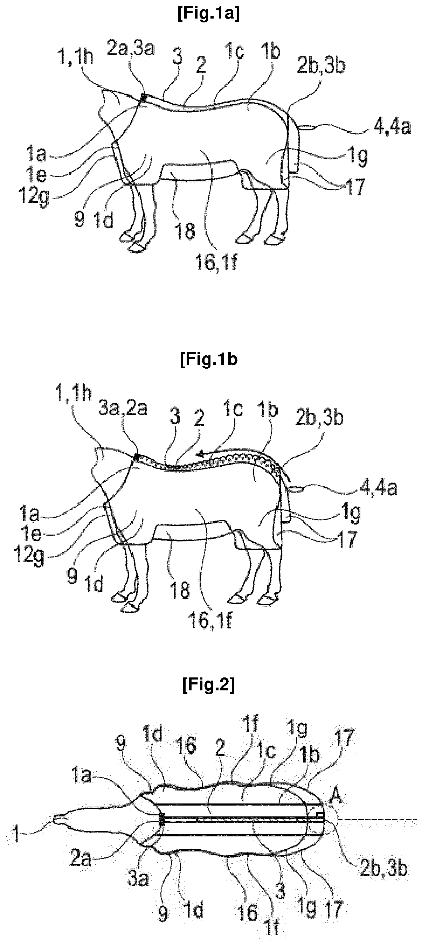

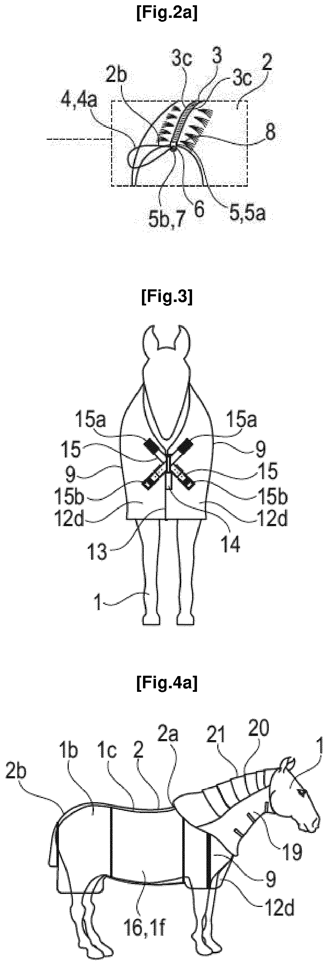

La zone dorsale 2 est pourvue d'une gaine 3 qui présente une extrémité 3a située au voisinage d'un bord 2a, 2b et une ouverture 3b opposée à ladite extrémité. Sur les figures 1a, 1b et 2, l'extrémité 3a et l'ouverture 3b de la gaine 3 sont disposées sur respectivement le bord avant 2a et le bord arrière 2b de la zone dorsale 2.

La couverture comprend en outre un cordon 4 qui est disposé dans la gaine 3 en présentant un bout solidaire de ladite couverture au voisinage de l'extrémité de ladite gaine et un bout libre 4a saillant de l'ouverture, ledit bout libre étant équipé d'un dispositif 5 de réglage de la dimension du cordon 4 qui est disposé dans la gaine 3, de sorte à permettre un ajustement de la dimension longitudinale de ladite zone dorsale à la dimension longitudinale du dos 1c de l'animal 1.

En particulier, la gaine 3 est formée d'un empiècement textile dont les bords longitudinaux 3a sont associés à la zone dorsale 2, ce qui permet d'ajuster la dimension longitudinale de ladite zone dorsale en faisant froncer ladite gaine, comme représenté sur la figure 1b.

De façon avantageuse, le bout de cordon 4 solidaire de la couverture est fixé à l'extrémité 3a de la gaine 3 et/ou au bord 2a, 2b au voisinage de laquelle est disposée ladite extrémité, ce qui permet, en tirant sur le bout libre 4a, de réaliser une traction sur toute la dimension longitudinale de la gaine 3 et/ou de la zone dorsale 2, et donc de faire froncer de façon homogène ladite zone dorsale.

La gaine 3 peut être disposée sur une face extérieure de la zone dorsale 2, afin de ne pas être en contact direct avec la colonne vertébrale de l'animal 1, et ainsi de limiter les risques de gêne due aux frottements du cordon 4 disposé dans ladite gaine.

Par ailleurs, le cordon 4 peut être réalisé en un matériau élastique, afin de limiter l'effort de traction à exercer sur lui pour pouvoir réaliser l'ajustement de la zone dorsale 2.

En relation avec la figure 2a, le dispositif de réglage 5 comprend un organe dans lequel le bout libre 4a est monté en translation, ledit organe étant équipé d'un moyen de blocage en position sur ledit bout libre et étant agencé pour être maintenu à l'extérieur de la gaine.

L'organe comprend un corps tubulaire 5a qui est pourvu d'un alésage 6 dans lequel coulisse le bout libre 4a. Le corps 5a est fixé sur la couverture à proximité de l'ouverture 3b et/ou présente des dimensions plus importantes que celles de ladite ouverture, afin d'éviter son passage dans ladite ouverture, et ainsi permettre à la gaine 3, et donc à la zone dorsale 2, de se froncer correctement lorsque l'on exerce une traction sur le bout libre 4a du cordon 4.

Le moyen de blocage comprend une tige 5b qui est montée en translation dans le corps 5a suivant une direction perpendiculaire à la direction de translation du cordon 4, et qui est pourvue d'un orifice traversant dans lequel coulisse ledit cordon, ladite tige étant déplaçable d'une position de blocage, dans laquelle un bord de son orifice appuie sur le bout libre 4 pour l'empêcher de coulisser dans l'alésage 6, vers une position de libération, dans laquelle ledit orifice est sensiblement aligné avec ledit alésage pour permettre ledit coulissement.

En particulier :
- la tige 5b est pourvue d'un bouton 7 pour permettre son déplacement vers la position de libération par pression manuelle sur ledit bouton ;
- le moyen de blocage comprend un élément de rappel élastique de la tige 5b en position de blocage du bout libre 4, par exemple sous la forme d'un ressort en spirale monté autour de ladite tige.

En relation avec les figures 1a, 1b, 2 et 2a, le bout libre 4a du cordon 4 est replié sur lui-même pour former une boucle, ce qui permet de faciliter sa saisie pour effectuer une traction sur lui.

Par ailleurs, comme représenté sur la figure 2a, la couverture présente une poche 8 de rangement du bout libre 4 et/ou du dispositif de réglage 5 qui est disposée au voisinage de l'ouverture 3b.

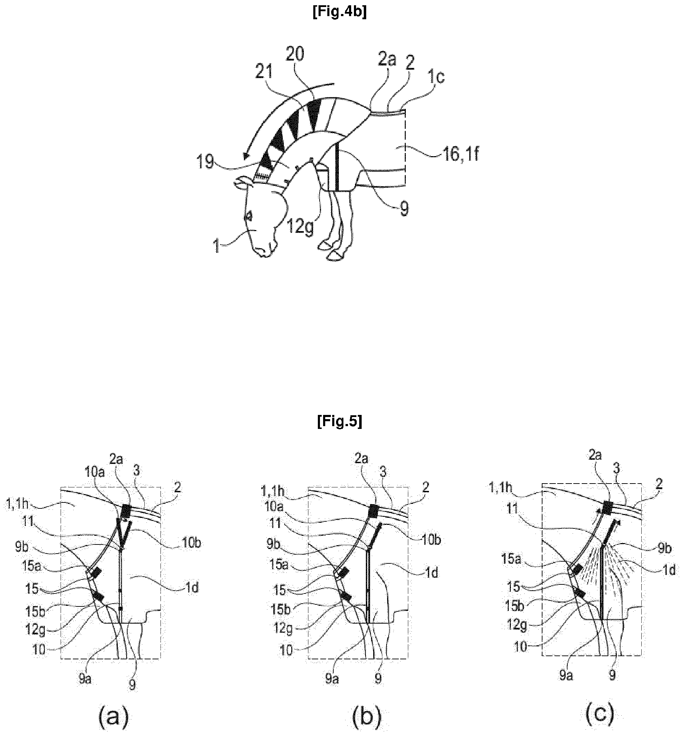

Pour pouvoir envelopper le corps de l'animal 1, la couverture comprend deux parties latérales 9 qui s'étendent de part et d'autre de la zone dorsale 2 pour venir recouvrir chacune au moins partiellement une épaule 1d de l'animal 1. En particulier, comme représenté sur la figure 5, chaque partie 9 est équipée d'un dispositif de réglage de sa dimension transversale, afin de pouvoir l'adapter à la dimension transversale de l'épaule 1d qu'elle recouvre.

Le dispositif de réglage comprend une sangle 10 fixée à un bord distal 9a d'une partie 9 de recouvrement d'épaule, ladite sangle étant engagée dans une boucle 11 solidaire d'une portion proximale 9b de ladite partie de recouvrement d'épaule pour permettre le réglage de la dimension transversale de ladite partie entre son bord distal 9a et sa portion proximale 9b.

La sangle 10 présente une extrémité libre pourvue d'un moyen de fixation, par exemple sous la forme d'une bande autoagrippante 10a de type Velcro®, qui est destinée à être accrochée au moins partiellement sur une bande autoagrippante 10b complémentaire associée sur la partie proximale 9b, afin de fixer la dimension transversale désirée pour la partie 9 de recouvrement d'épaule.

La dimension transversale est réglable entre une valeur maximale (figure 5(b)), dans laquelle la sangle 10 n'exerce aucune traction sur la partie 9 de recouvrement d'épaule, et une valeur minimale (figure 5(c)), dans laquelle les bandes autoagrippantes 10a, 10b sont associées avec leurs bords supérieurs respectifs en regard, la traction exercée par la sangle 10 sur ladite partie de recouvrement étant alors maximale.

Pour pouvoir ajuster la partie 9 de recouvrement d'épaule à la dimension transversale souhaitée, l'utilisateur décroche la sangle 10 de la partie proximale 9b, comme représenté sur la figure 5(a), puis, selon le réglage à effectuer, exerce une traction vers le haut ou fait coulisser la sangle 10 vers le bas. Ensuite, lorsque la partie 9 de recouvrement d'épaule présente la dimension transversale souhaitée, l'utilisateur accroche la sangle 10 sur la partie proximale 9b.

Chaque partie 9 de recouvrement d'une épaule peut en outre être prolongée longitudinalement par une partie 12g, 12d destinée à recouvrir un côté - respectivement gauche ou droit - du poitrail 1e de l'animal 1, lesdites parties de recouvrement du poitrail présentant chacune un bord libre 13 qui sont destinés à être disposés en regard sur ledit poitrail.

En relation avec la figure 3, les bords libres 13 s'étendent chacun dans le prolongement longitudinal de respectivement un côté du bord avant 2a, et présentent des moyens complémentaires 14 de fixation réversible, notamment sous la forme de bandes autoagrippantes.

Pour pouvoir ajuster les parties de recouvrement 12g, 12d au poitrail 1e, la couverture peut comprendre au moins une sangle 15 de serrage qui présente deux extrémités 15a, 15b fixées sur respectivement une partie 12g, 12d de recouvrement du poitrail.

Sur la figure 3, la couverture comprend deux sangles 15 de serrage qui comprennent chacune une extrémité supérieure 15a - respectivement inférieure 15b - fixée sur une première partie 12g, 12d et une extrémité inférieure 15b - respectivement supérieure 15a, fixée sur la deuxième partie 12d, 12g.

Dans le mode de réalisation représenté, la couverture comprend deux parties latérales 16 s'étendant de part et d'autre de la zone dorsale 2 et destinées à recouvrir chacune un flanc 1f de l'animal 1, chaque partie 16 étant prolongée vers l'avant par une partie 9 de recouvrement d'épaule et en arrière par une partie 17 de recouvrement d'une cuisse 1g.

La couverture comprend un rabat ventral 18 qui s'étend transversalement dans le prolongement d'une partie 16 de recouvrement d'un flanc 1f, et dont le bord libre est destiné à être associé à l'autre partie 16 de recouvrement de flanc, par exemple au moyen de bandes autoagrippantes, pour pouvoir recouvrir le ventre de l'animal 1.

Par ailleurs, la couverture peut également comprendre une partie arrière qui s'étend dans le prolongement longitudinal du bord arrière 2b, et destinée à recouvrir les fesses de l'animal 1.

Sur les figures 4a et 4b, la couverture comprend en outre un manchon 19 qui s'étend dans le prolongement longitudinal du bord avant 2a, ledit manchon étant destiné à recouvrir au moins partiellement l'encolure 1h de l'animal 1.

De façon avantageuse, le manchon 19 comprend un moyen d'ajustement de sa dimension longitudinale à la dimension longitudinale de l'encolure 1h.

Pour ce faire, le manchon 19 peut présenter au moins un soufflet 20 extensible dans la dimension longitudinale, ce qui permet une adaptation dynamique dudit manchon à l'encolure 1h, notamment suivant les mouvements de tête effectués par l'animal 1.

Dans le mode de réalisation représenté, le manchon 19 comprend plusieurs soufflets 20 espacés deux à deux par une portion de manchon 21 de dimension longitudinale constante, ce qui permet audit manchon de s'ajuster à l'encolure 1h de façon homogène. En outre, chaque soufflet 20 s'étend transversalement entre deux zones latérales du manchon 19

## Revendications

1. Article vestimentaire comprenant une couverture destinée à protéger au moins partiellement le corps d'un animal (1), ladite couverture comprenant une zone dorsale (2) s'étendant longitudinalement le long d'une ligne sagittale entre un bord avant (2a) destiné à être disposé sur le garrot (1a) et un bord arrière (2b) destiné à être disposé sur la croupe (1b) dudit animal, ledit article étant **caractérisé en ce que** la zone dorsale (2) est pourvue d'une gaine (3) présentant une extrémité (3a) située au voisinage d'un bord (2a) et une ouverture (3b) opposée à ladite extrémité, un cordon (4) étant disposé dans ladite gaine en présentant un bout solidaire de la couverture au voisinage de l'extrémité (3a) de ladite gaine et un bout libre (4a) saillant de l'ouverture (3b), ledit bout libre étant équipé d'un dispositif (5) de réglage de la dimension du cordon (4) qui est disposé dans la gaine (3) de sorte à permettre un ajustement de la dimension longitudinale de ladite zone dorsale à la dimension longitudinale du dos (1c) de l'animal (1).

2. Article vestimentaire selon la revendication 1, **caractérisé en ce que** le dispositif de réglage (5) comprend un organe dans lequel le bout libre (4a) est monté en translation, ledit organe étant équipé d'un moyen (5b) de blocage en position sur ledit bout libre et étant agencé pour être maintenu à l'extérieur de la gaine (3).

3. Article vestimentaire selon l'une des revendications 1 ou 2, **caractérisé en ce que** l'extrémité (3a) et l'ouverture (3b) de la gaine (3) sont disposées sur respectivement le bord avant (2a) et le bord arrière (2b) de la zone dorsale (2).

4. Article vestimentaire selon l'une quelconque des revendications 1 à 3, **caractérisé en ce que** le bout de cordon (4) solidaire de la couverture est fixé au bord (2a) de la couverture et/ou à l'extrémité (3a) de la gaine (3).

5. Article vestimentaire selon l'une quelconque des revendications 1 à 4, **caractérisé en ce que** la couverture présente une poche (8) de rangement du bout libre (4a) et/ou du dispositif de réglage (5) qui est disposée au voisinage de l'ouverture (3b).

6. Article vestimentaire selon l'une quelconque des revendications 1 à 5, **caractérisé en ce que** la couverture comprend deux parties latérales (9) qui s'étendent de part et d'autre de la zone dorsale (2) pour venir recouvrir chacune au moins partiellement une épaule (1d) de l'animal (1), chaque partie (9) étant équipée d'un dispositif (10, 10a, 10b, 11) de réglage de sa dimension transversale.

7. Article vestimentaire selon la revendication 6, **caractérisé en ce que** le dispositif de réglage comprend une sangle (10) fixée à un bord distal (9a) d'une partie (9) de recouvrement d'épaule, ladite sangle étant engagée dans une boucle (11) solidaire d'une portion proximale (9b) de ladite partie de recouvrement d'épaule pour permettre le réglage de la dimension transversale de ladite partie de recouvrement entre son bord distal (9a) et sa portion proximale (9b).

8. Article vestimentaire selon l'une des revendications 6 ou 7, **caractérisé en ce que** chaque partie (9) de recouvrement d'épaule est prolongée longitudinalement par une partie (12g, 12d) destinée à recouvrir un côté du poitrail (1e) de l'animal (1), lesdites parties de recouvrement du poitrail présentant chacune un bord libre (13) qui sont destinés à être disposés en regard sur le poitrail (1e).

9. Article vestimentaire selon la revendication 8, **caractérisé en ce que** la couverture comprend au moins une sangle de serrage (15) qui présente deux extrémités (15a, 15b) fixées sur respectivement une partie (12g, 12d) de recouvrement du poitrail (1e).

10. Article vestimentaire selon la revendication 9, **caractérisé en ce que** la couverture comprend deux sangles de serrage (15) comprenant chacune une extrémité supérieure (15a) - respectivement inférieure (15b) - fixée sur une première partie (12g, 12d) de recouvrement du poitrail (1e), et une extrémité inférieure (15b) - respectivement supérieure (15a) - fixée sur la deuxième partie (12d, 12g) de recouvrement du poitrail (1e).

11. Article vestimentaire selon l'une quelconque des revendications 1 à 10, **caractérisé en ce que** la couverture comprend un manchon (19) qui s'étend dans le prolongement longitudinal du bord avant (2a), ledit manchon étant destiné à recouvrir au moins partiellement l'encolure (1h) de l'animal (1).

12. Article vestimentaire selon la revendication 11, **caractérisé en ce que** le manchon (19) comprend un moyen (20) d'ajustement de sa dimension longitudinale à la dimension longitudinale de l'encolure (1h) de l'animal (1).

13. Article vestimentaire selon la revendication 12, **caractérisé en ce que** le manchon (19) présente au moins un soufflet (20) extensible dans la direction longitudinale.

14. Article vestimentaire la revendication 13, **caractérisé en ce que** le manchon (19) comprend plusieurs soufflets (20) espacés deux à deux par une portion (21) de manchon de dimension longitudinale constante.

15. Article vestimentaire selon l'une quelconque des revendications 1 à 14, **caractérisé en ce qu'**il est réalisé en un matériau textile ajouré, notamment de type mesh.
